Europäisches Patentamt

European Patent Office

Office européen des brevets

(11) Veröffentlichungsnummer: **0 305 714**
**A2**

## EUROPÄISCHE PATENTANMELDUNG

(21) Anmeldenummer: **88111517.4**

(22) Anmeldetag: **29.09.84**

(51) Int. Cl.⁴: **B29C 51/08**

(30) Priorität: **06.10.83 CH 5451/83**

(43) Veröffentlichungstag der Anmeldung:
**08.03.89 Patentblatt 89/10**

(60) Veröffentlichungsnummer der früheren
Anmeldung nach Art. 76 EPÜ: **0 146 700**

(84) Benannte Vertragsstaaten:
**AT BE CH DE FR GB IT LI LU NL SE**

(71) Anmelder: **Servichem AG**
**Baarerstr. 43**
**CH-6300 Zug(CH)**

(72) Erfinder: **Mutti, Werner H.**
**Rigistrasse 16**
**CH-5033 Buchs(CH)**

(74) Vertreter: **Blum, Rudolf Emil Ernst et al**
**c/o E. Blum & Co Patentanwälte Vorderberg 11**
**CH-8044 Zürich(CH)**

(54) Vorrichtung zum Formen von Gegenständen aus einem thermoplastischen Material.

(57) Um Gegenstände, die mittels Warmverformung in einer Materialbahn geformt wurden, längs ihrem Umfang massgenau aus dieser Materialbahn auszustanzen, wird vor einer zentrierenden Umfangsstanzstelle (5) eine Längstrennvorrichtung (70,71) angeordnet. Damit wird die Materialbahn zwischen den geformten Gegenständen in der Längsrichtung aufgetrennt. Die Gegenstände können sich dann unabhängig voneinander in einer Zentrieranordnung (73) seitlich positionieren, bevor sie auf ihren Umfang gestanzt werden. Damit lässt sich trotz ungleichem Schwund in der Materialbahn eine exakte Ausstanzung der Gegenstände erreichen.

*Fig. 3*

## Vorrichtung zur Herstellung von Gegenständen aus einer Materialbahn einer thermoplastischen Folie

Die Erfindung betrifft eine Vorrichtung zur Herstellung von Gegenständen aus einer thermoplastischen Materialbahn, mit einer Aufheizvorrichtung zum Erwärmen der Materialbahn bis in ihren Verformungsbereich, einer nachgeschalteten Warmformeinrichtung zur Formung der Gegenstände aus der Materialbahn, einer Ausstanzeinrichtung zum Abtrennen der geformten Gegenstände aus der Materialbahn, und einer Materialbahntransporteinrichtung zum Verschieben der Materialbahn durch die Vorrichtung.

Im Zusammenhang mit Vorrichtungen dieser Art treten insbesondere bei der Verarbeitung von Materialien mit ungünstigem thermischen Verhalten Probleme bei der Erwärmung sowie dem massgerechten Ausstanzen der geformten Gegenstände aus der Materialbahn auf. Dies deshalb, weil die nocht warme Folie relativ wenig massstabil ist und insbesondere beim Abkühlen ein nur schwer zu erfassender Schwund auftritt. Um dennoch ohne eine die Produktion hemmende Ruhezeit für die Stabilisierung des Materials eine massgenaue Ausstanzung zu erzielen, ist erfindungsgemäss vorgesehen, dass die Ausstanzeinrichtung eine Längs-Trennvorrichtung sowie eine nachgeschaltete, zentrierende Umfangsstanzstelle aufweist, wobei die Materialbahn durch die Längs-Trennvorrichtung zwischen den geformten Gegenständen in der Längsrichtung der Materialbahn auftrennbar ist, so dass die Gegenstände unabhängig voneinander in einer Zentrieranordnung seitlich positionierbar sind, bevor sie in der Umfangsstanzstelle auf ihren Endumfang gestanzt werden. Die Vortrennung in Längsrichtung, bei der Massgenauigkeit nicht erforderlich ist, erlaubt die voneinander unabhängige Einpassung der einzelnen Gegenstände in die Zentriervorrichtung, so dass eine individuelle Positionierung unabhängig von allenfalls unregelmässigem Massschwund in der Materialbahn ermöglicht wird. Die positionierten Gegenstände können dann mit einem auf die Zentriervorrichtung justierten Stanzmesser auf ihre exakte Umfangsform gebracht werden.

Nachfolgend wird anhand der beiliegenden Zeichnung ein Ausführungsbeispiel einer Vorrichtung zur Herstellung von Gegenständen aus einer Materialbahn einer thermoplastischen Folie beschrieben, das die vorstehend erwähnte Aufheizeinrichtung, Ausstanzeinrichtung und Transporteinrichtung in Kombination enthält.

Es zeigen:

Fig. 1 eine schematische Queransicht der Vorrichtung, teilweise im Schnitt, längs der Transportrichtung;

Fig. 2 eine schematische Aufsicht entsprechend Fig. 1;

Fig. 3 die Trenn- und Umfangsstanzstelle,

Fig. 4 einen schematischen Schnitt durch die Umfangsstanzstelle von Fig. 3

Fig. 5 ein Detail der Trennvorrichtung von Fig. 3.

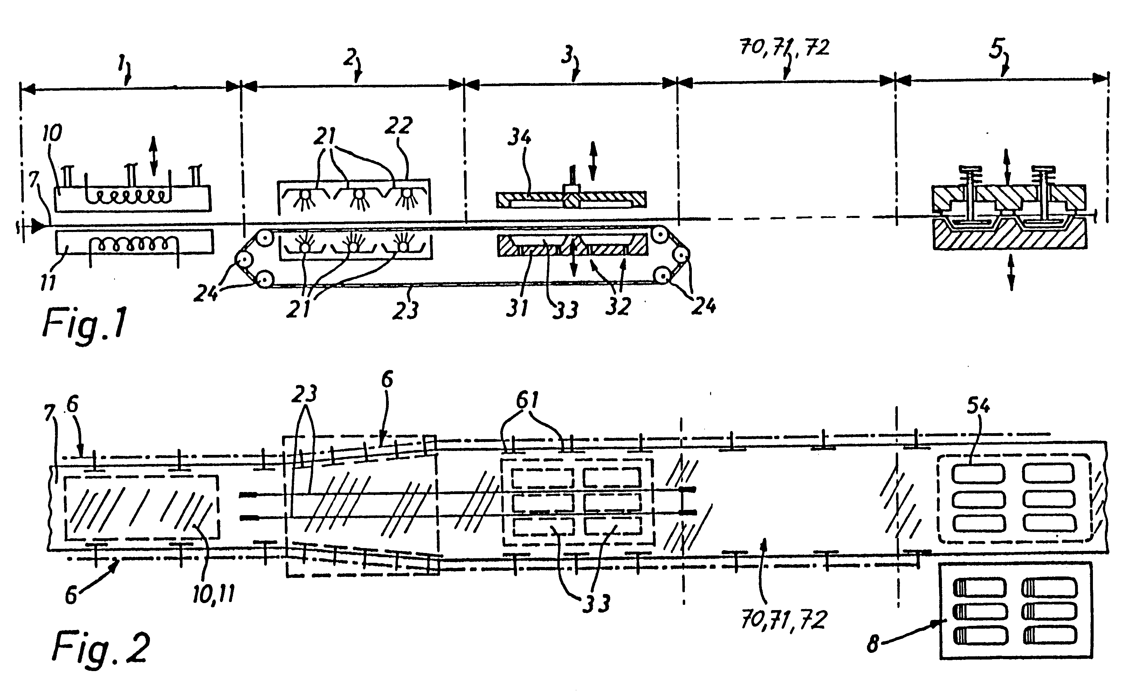

Die dargestellte Vorrichtung, welche zunächst anhand der beiden ersten Figuren beschrieben wird, weist im wesentlichen fünf aufeinanderfolgende Bearbeitungsstationen auf. Auf der Eingangsseite (links in den Fig. 1 und 2) ist eine Rollentraganordnung für eine Materialrolle bekannten Aufbaus vorgesehen (nicht dargestellt). Sie ist für Materialrollen einer Breite von beispielsweise 560 mm und einem Durchmesser von 1200 mm vorgesehen. Da der Materialtransport durch die Vorrichtung in Schritten erfolgt, ist der Rollentraganordnung eine Kompensationsstelle nachgeschaltet, wo jeweils eine Schrittlänge des Materialbandes zwischengespeichert werden kann. Die Abrollgeschwindigkeit der Rolle kann damit im wesentlichen stetig bleiben, wobei mittels Lichtschranken die Abrollgeschwindigkeit dem jeweiligen Rollendurchmeser angepasst werden kann. Anschliessend wird die Materialbahn durch die seitliche Transporteinrichtung 6 erfasst und in Schritten durch die Vorrichtung gefördert. Die erste Bearbeitungsstelle ist eine Kontaktheizung 1 mit zwei geheizten Platten 10 und 11, zwischen welchen die Folie 7 einklemmbar ist. Die elektrische Heizung der Platten ist unabhängig voneinander auf einen einstellbaren Sollwert regelbar. Die beiden Platten 10, 11 können mit einem wählbaren Pressdruck die Folie 7 intermittierend einklemmen und wieder freigeben. Zu diesem Zweck ist mindestens eine der Platten, in der Figur die obere Platte 10, mit einer entsprechenden Hydraulik- oder Pneumatik versehen. Die Temperatur sowie der Anpressdruck der Platten werden so eingestellt, dass in der vorgesehenen Schrittdauer von z.B. 4 sec. die für das jeweilige Material notwendige Aufheizung erfolgt. Bei Mehrschichtfolien mit innenliegenden, temperaturempfindlichen Sperrschichten werden die genannten Grössen so eingestellt, dass sich das gewünschte Temperaturprofil in der Folie ausbildet. In der Kontaktheizung wird die Folie über im wesentlichen die gesamte Arbeitsfläche gleichmässig erwärmt, jedoch noch nicht bis zum Erweichungspunkt. Ein Kleben der Folie an den Platten 10,11 ist damit ausgeschlossen.

Unmittelbar nach der Kontaktheizung 1 gelangt die Materialbahn beim nächsten Arbeitsschritt zur Strahlungsheizung 2. Diese besteht aus beidseitig der Folie 7 angeordneten, mittelwelligen Strahlern 21, die zur Verminderung der Luftkonvektion in einem Gehäuse 22 angeordnet sind.

Innerhalb der zur Verfügung stehenden Schrittzeit kann damit die restliche Erwärmung auf den Erweichungspunkt der Folie erfolgen. Die in diesem Bereich entstehende Querdehnung der Folie, welche durch die Einwirkung des Eigengewichts noch verstärkt wird, kann zu einem Durchhang führen, durch welchen die Abstände zwischen Folie und Strahler verändert werden. Um diesen Durchhang aufzunehmen bzw. zu reduzieren, können zwei Massnahmen vorgesehen sein: Die eine besteht in der Stützung der Folie in deren zentralem Bereich durch mindestens ein mitlaufendes Stützorgan. Bei der dargestellten Vorrichtung sind hierzu zwei mitlaufende Drahtseile 23 vorgesehen, die über Umlenk- bzw. Antriebsrollen 24 vor der Strahlungsheizung von unten an die Folie herangeführt werden und diese bis in die Formeinrichtung 3 stützen. Des weiteren kann durch Transportvorrichtung im Bereich der Strahlungsheizung eine lokale Querstreckung bewirkt werden. Die beschriebene zweistufige Heizung stellt insbesondere für Mehrschichtfolien eine optimale Erwärmung sicher. Während mit der Kontaktheizung der Folie schnell und energiesparend ein Temperaturprofil aufgeprägt wird, bringt die Strahlungsheizung schliesslich die stabilen Deckfolien ohne Beschädigung der inneren (Sperr-)Folien auf ideale Erweichungstemperatur. Im speziellen hat sich diese Heizung bewährt für die Verarbeitung einer Mehrschichtfolie, bei der eine Sperrfolie aus Saran (einem Vinylidenchlorid-Vinylchlorid-Copolymer) mittels je eines Haftvermittlers mit Polypropylenaussenfolien verbunden sind, wobei die gesamte Foliendicke ca. 900 um beträgt, zu Behälterteilen. Es kommen aber auch andere Barrièrepolymere wir EVOH hierfür in Frage.

Die Formgebung kann in einer nachfolgenden Warmformeinrichtung 3 auf an sich bekannte Weise erfolgen. Diese ist derart ausgestaltet, dass sowohl im Positiv- als auch im Negativverfahren mit Vakuumverformung gearbeitet werden kann, und es andererseits auch möglich ist, Druckluftverformung vorzunahmen. Eine Kniehebelanordnung (nicht gezeigt) erlaubt das Oeffnen und Schliessen der Formen.

Die Warmformeinrichtung gemäss Fig. 1 ist zur Druckluftverformung ausgestaltet. In einer unteren Negativform 31 mit Luftaustrittskanälen 32 sind Ausnehmungen 33 zur gleichzeitigen Formung von sechs schalenartigen Behälterteilen ausgebildet. Zwischen den Ausnehmungen 33 sind Kanäle für die Drahtseile 23 vorgesehen. Mittels einer oberen Platte 34 können die einzelnen Ausnehmungen luftdicht geschlossen werden, wonach mittels Druckluft die Schalen geformt werden.

Die Ausstanzeinrichtung 5 ist von der Warmformeinrichtung getrennt, damit sich die Folie vor dem Ausstanzen ausreichend abkühlen kann, indem sonst besonders die noch weiche Sperrfolie am Stanzwerkzeug anhaftet und Fäden zieht. Die Ausstanzeinrichtung 5 ist derart ausgestaltet, dass trotz unregelmässigem Schwund der Folie beim Abkühlen nach dem Warmformen für jeden Behälter ein gleicher, definierter Aussenumfang zu Stande kommt. Zu diesem Zweck wird die Materialbahn zuvor in einer Trennvorrichtung 70,71 zwischen den geformten Behältern bereichsweise so aufgetrennt, dass diese noch von der Materialbahn getragenen Behälter unabhängig voneinander in der eigentlichen Umfangsstanzstelle positioniert werden können. In Fig. 1 ist die Trennvorrichtung 70,71 nur durch Bezugsziffern angedeutet.

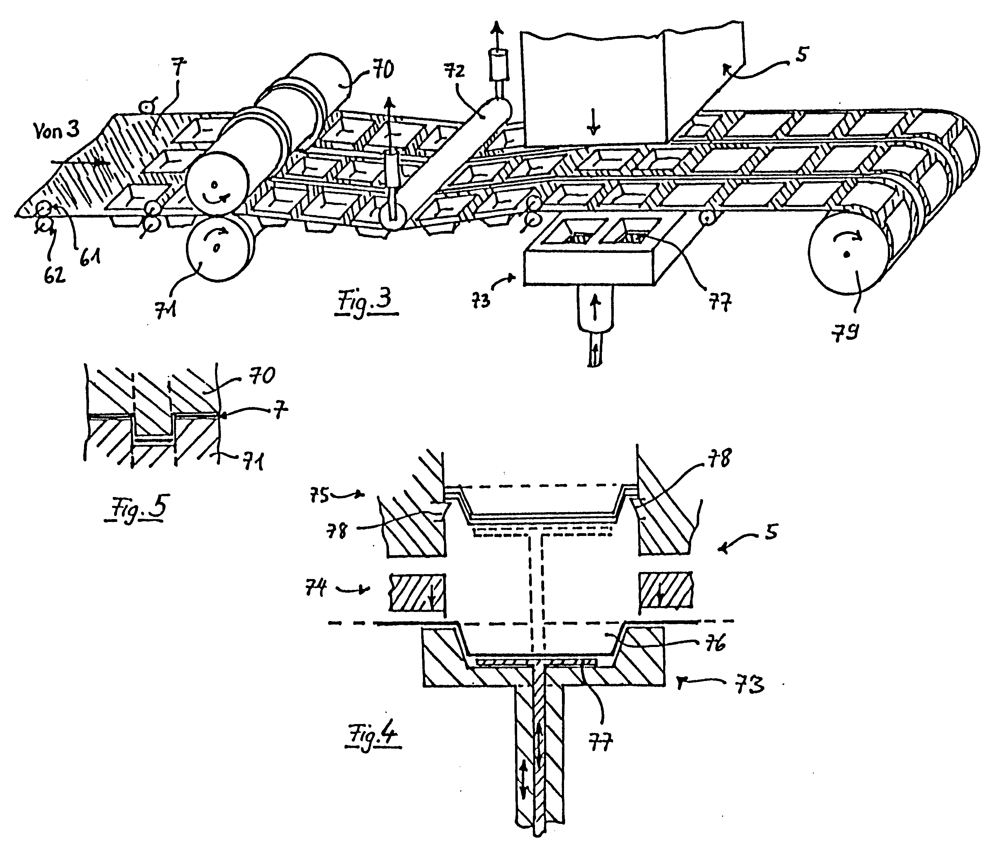

In den Figuren 3 bis 5 ist sie zusammen mit der Ausstanzeinrichtung 5 im Detail gezeigt. Die Materialbahn mit den darin eingeformten Schalen wird zunächst durch Schneidwalzen 70,71 zwischen Schalenlängsreihen in Einzelbahnen aufgetrennt, so dass jede der Einzelbahnen quer zur Transportrichtung unabhängig von den andern verschiebbar ist zur seitlichen Positionierung der Schalen beim nachfolgenden Umfangsstanzen in der Umfangsstanzstelle 5. Die Schneidwalzen 70,71 sind so profiliert (Fig. 5), dass bei der Trennung ein schmaler Streifen aus der Materialbahn herausgeschnitten wird. Nach den Schneidwalzen 70,71 ist eine Rolle 72 vorgesehen, welche die Materialbahnen leicht aus der Ebene hinausdrückt. Vor dem Positionieren der Schalen in der Umfangsstanzstelle 5 wird die Rolle 72 angehoben. Die damit freiwerdende Länge der Materialbahn reicht aus, um ein ausreichendes Längsspiel beim Positionieren der Schalter zu gewährleisten. Die Umfangsstanzstelle 5 ist in Fig. 4 für eine einzige Schale im Querschnitt schematisch gezeigt. Sie besitzt einen unter der Materialbahn angeordneten Positionier- und Auswertteil 73, einen darüber angeordneten Stanzteil 74 sowie ein Magazin 75 für die fertig ausgestanzten Schalen. Beim Transport der Materialbahn 7 bleiben der Positionier- und Auswertteil 73 sowie der Stanzteil 74 von der Bahn abgehoben. Zum Ausstanzen wird zunächst der Positionier- und Auswertteil 74 von unten gegen die Schalen angehoben, welche sich dank ihrem seitlichen und in Längsrichtung wirkenden Spiel in den entsprechenden Ausnehmungen 76 ausrichten. Danach erfolgt die Umfangsstanzung durch Senken des Stanzteils 74. Die ausgestanzten Schalen werden hernach mittels einem Auswerfer 77 durch den Stanzteil 74 hindurch in das oben gelegene Magazin 75 verschoben und dort von unten an den jeweiligen Schalenstapel herangeführt, der durch elastische Vorsprünge 78 im Magazin gehalten ist. Nach dem Zurückziehen des Auswerfers 77 ist der Arbeitstakt beendet. Das übrigbleibende Bandmaterial wird auf einer Rolle 79 aufgerollt. Das beschriebene Stanzverfahren eignet sich, unabhängig von der Ausgestaltung der vorangehenden Aufheizeinrichtung, zur exakten Umfangsstanzung von warmgeformten Gegenständen, welche sich beim Erkalten in ihren Massen ändern, indem mittels der Zentrierung diese unerwünschten und nur schwer überblickbaren Effekte ausgeschaltet werden können.

Zum Transport der Materialbahn durch die Vorrichtung verläuft eine Transporteinrichtung 6 beidseitig der Materialbahn längs der gesamten Vorrichtung und greift an dem ausserhalb der Formgebungszone liegenden Rand der Materialbahn an. Bei einer Materialbahnbreite von z.B. 560 mm und einer Formgebungszone von max. 525 mm Breite bleibt im vorliegenden Beispiel hierfür auf jeder Seite ein Rand von ca. 17 mm. Die Transporteinrichtung weist längs der Vorrichtung verteilte Treibräder 61 auf, von denen jedes gegen eine entsprechende Stützrolle 62 abgestützt ist. Die Materialbahn 7 wird zwischen den Treibrädern und den Stützrollen erfasst. Eine entsprechende Vorrichtung ist Gegenstand der europäischen Patentanmeldung Nr. 84 111 673.4.

Wie bereits erwähnt wurde, ist die hier beschriebene Vorrichtung zur Herstellung von Gegenständen aus einer Materialbahn einer thermoplastischen Folie insbesondere geeignet zur Verarbeitung von Mehrschichtfolien mit wärmeempfindlichen Innenschichten. Eine solche Folie ist etwa ein Laminat einer Dicke von 900 μm aus Polypropylendeckfolien, die mittels Haftvermittler mit einer innenliegenden Sperrschicht aus Saran verbunden sind. Solche relativ dicken Mehrschichtfolien, welche sich wegen der guten Sperreigenschaften zur Herstellung von Lebensmittelbehältern eignen, waren bisher wegen des schwierigen thermischen Verhaltens der Folie nur schwer verarbeitbar. Die vorliegende Vorrichtung erlaubt dies nun in einwandfreier weise.

## Ansprüche

1. Vorrichtung zur Herstellung von Gegenständen aus einer thermoplastischen Materialbahn, mit einer Aufheizvorrichtung zum Erwärmen der Materialbahn bis in ihren Verformungsbereich, einer nachgeschalteten Warmformeinrichtung zur Formung der Gegenstände aus der Materialbahn, einer Ausstanzeinrichtung zum Abtrennen der geformten Gegenstände aus der Materialbahn, und einer Materialbahntransporteinrichtung zum Verschieben der Materialbahn durch die Vorrichtung, dadurch gekennzeichnet, dass die Ausstanzeinrichtung eine Längs-Trennvorrichtung (70,71) sowie eine nachgeschaltete, zentrierende Umfangsstanzstelle (5) aufweist, wobei die Materialbahn durch die Längs-Trennvorrichtung zwischen den geformten Gegenständen in der Längsrichtung der Materialbahn auftrennbar ist, so dass die Gegenstände unabhängig voneinander in einer Zentrieranordnung (73) seitlich positionierbar sind, bevor sie in der Umfangsstanzstelle auf ihren Endumfang gestanzt werden.

2. Vorrichtung nach Anspruch 1, dadurch gekennzeichnet, dass die Längstrennvorrichtung Trennwalzen (70,71) aufweist.

3. Vorrichtung nach einem der Ansprüche 1 oder 2, dadurch gekennzeichnet, dass zwischen der Längstrennvorrichtung und der Umfangsstanzstelle (5) ein Materialdurchhang gebildet ist, derart, dass die Gegenstände in der Umfangsstanzstelle (5) in Längsrichtung positionierbar sind.

Fig. 1

Fig. 2

Fig.3

Fig.4

Fig.5